# EUROPEAN PATENT SPECIFICATION

(11) **EP 0 468 959 B1**
(45) Date of publication and mention of the grant of the patent: **08.09.1993**
(21) Application number: 89908499.0
(22) Date of filing: 24.07.1989
(51) Int. Cl.: F16L 15/04

(54) **PACKING IN THE FORM OF A TRUNCATED CONE FOR MAKING A WATERTIGHT SEAL BETWEEN THREADED CONNECTIONS**
DICHTUNG IN FORM EINES ABGESCHNITTENEN KEGELS ZUR WASSERDICHTEN ABDICHTUNG EINER SCHRAUBVERBINDUNG
GARNITURE D'ETANCHEITE SOUS FORME DE CONE TRONQUE POUR ASSURER L'ETANCHEITE D'UN RACCORDEMENT FILETE

(30) Priority: 21.04.1989 IT 2095489
(43) Date of publication of application: 05.02.1992
(73) Proprietor: BRUNO, Salvatore, I-20017 Rho (IT)
(72) Inventor: BRUNO, Salvatore, I-20017 Rho (IT)
(74) Representative: Filippi, Remo
(86) International application number: IT8900054
(87) International publication number: WO9012976

## Description

The invention concerns a truncated cone shaped packing designed to make a watertight seal between threaded connections. In the normal way tow or cotton threads or plastic tape, especially PTFE (polytetrafluoroethylene) are used to ensure a watertight seal between threaded connections screwed together to form a joint, such as those on pipes carrying fluids, on taps, in apparatuses such as washing machines, in stove burners and other pieces of equipment too numerous to mention.

As packing materials of these kinds have no particular shape, structure or dimensions they must be adapted in each case to suit the threaded parts to be joined.

Untrained people often find it difficult to use such packing and their efforts may lead to disappointing results.

In the case of fluids under pressure, even if only water, or gas for domestic purposes, leaks may occur involving serious consequences.

An expert manages to make secure connections but even so the job is a long and tiresome one.

The patent DE-A-2230740 discloses an annular packing, for connecting the threaded ends of pipes required for carrying liquid or gaseous products, said packing having an annular body whose internal surface is substantially cylindrical and external surface substantially conical. Wall thickness of the packing therefore gradually increases starting from the end of the smaller diameter.

At the position of greatest diameter the packing has an outward facing raised rim in one piece with the packing itself.

The packing is made of a highly elastic polyamide plastic material, such as nylon. By placing the packing between the two male and female threaded parts to be joined, on their being screwed together this should cause adaption of the packing between the two threads and so create a watertight seal more quickly and simply than may be done by methods in previous use.

In practice, however, such a packing presents many problems. Since its degree of elasticity can only be limited, its automatic adaption to the various shapes and sizes of the parts to be joined may be difficult if not impossible, especially as such parts may have become worn or scaly, or even be of unusual or irregular shapes and sizes. This may lead to cracking and produce an unreliable seal and, in any case, make necessary availability of a large and costly selection of packings of each size and each amterial.

The need to provide sufficient elasticity may limit the types of materials considered suitable.

Elasticity must not in fact be too great as this would weaken the packing.

Purpose of the invention is to avoid these many drawbacks as will be explained below.

Subject of the invention is a packing whose purpose is to ensure a perfect seal at the point where two tubular threaded parts are joined, consisting of a truncated cone-shaped body of plastic material whose walls, starting from the end where its diameter is least, greadually increase in thickness and which have an outer strengthening rim where the diameter is greatest.

The purpose of the invention is achieved by providing a longitudinal cut which extends through the thickness of the body from the smaller diameter end at least up to the strengthening rim to facilitate adaptation to the threads of the tubular parts to be joined.

The cut is made in said truncated cone-shaped body in accordance with a geometrical plane that passes along the axis of the packing.

This cut helps the packing to adapt itself to the male and female threads on the two connecting parts.

The effect of screwing up these two parts presses the two opposing edges of the cut together so that packing continuity is restored.

One type of execution includes, on one of the two transversal edges created by the cut, a thin flap of constant thickness whose inner surface is continuous with the inner surface of the truncated cone and whose width is practically equivalent to the length of the above edge.

Said flap lies over the cut and therefore over the outer surface of the wall of the truncated cone following on from said cut.

Screwing movement brings the edges of the cut closer together and causes the flap to slide over the surface of the truncated cone achieving maximum adaptation to the opposing interacting threads and thereby making for a secure watertight seal.

In some cases the cut in the wall of the truncated cone can extend for the whole length of said wall including the reinforcing rim, or else stop short of the rim thereby maintaining its continuity.

A suitable material for this packing is Teflon (PTFE) or a similar type.

The advantages of the invention are clear.

The packing can be mounted by anyone, however unpractised in the art, ensuring perfect watertightness while application is a quick and simple process.

This packing may be used in tubular threaded joints generally thereby offering a seal that is better or in any case no less efficient than that made by using well-known annular and flat packings or one made in other ways, but is far simpler, quicker and is much more reliable.

Characteristics and purposes of the invention will be made still clearer by the following examples of its execution illustrated by diagrammatically drawn figures.
Fig.3: Side view of the truncated cone packing, subject or the invention, opened on an axial geometric plane with covering flap.
Fig.4: Plan view of the above.
Fig.5: Side view of the invention opened on an axial geometric plane except for the base strengthening rim.
Fig.6: Plan view of the above.
Figs.7 and 8: Side and plan view of the packing shown in Figs. 5 and 6 with the flap lying over the outer surface of the truncated cone.

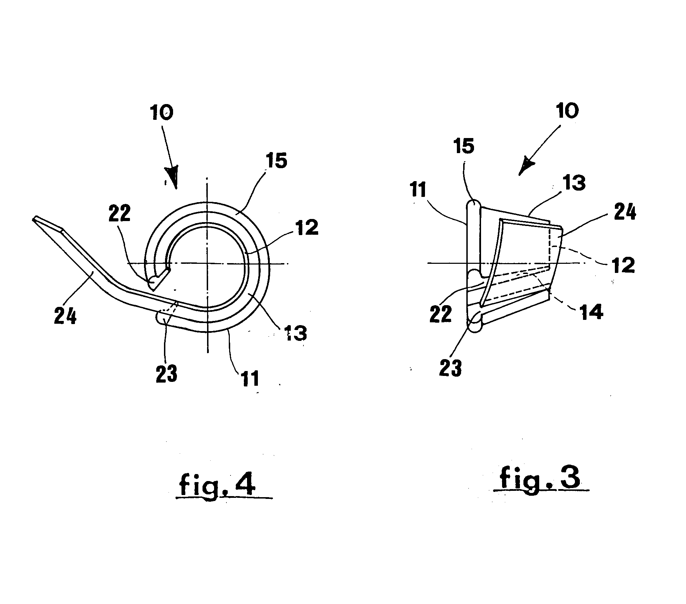

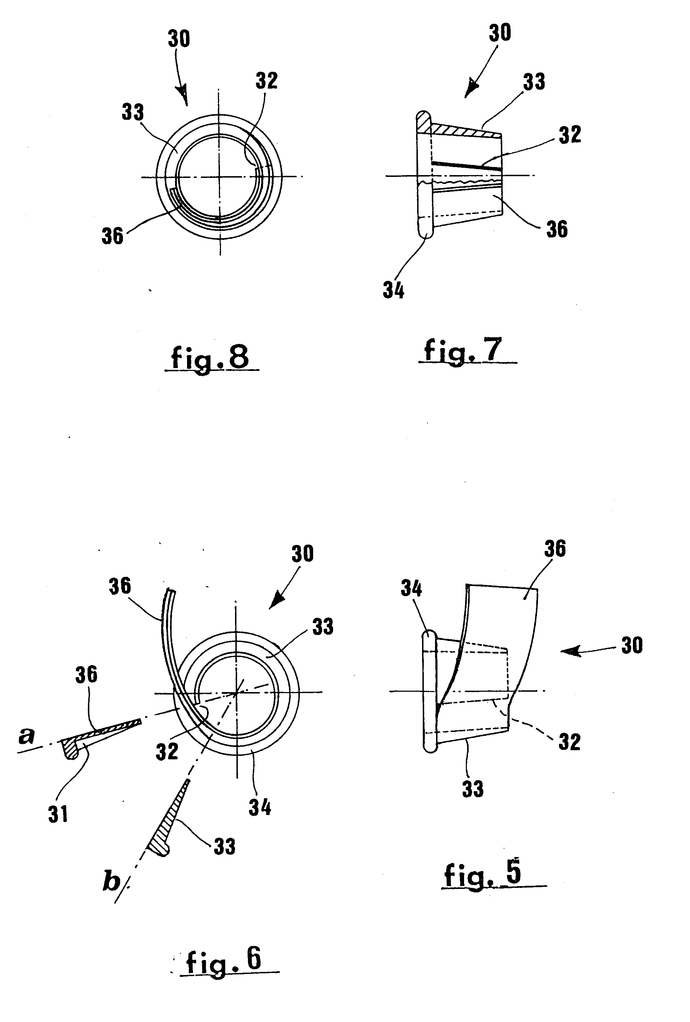

The teflon packing 10 has a monolithic body shaped like a truncated cone.

The thickness 14 of the walls 13 decreases steadily from the base 11 of a larger diameter to the base 12 of a smaller one.

The larger base is finished with an external rim 15 projecting outward.

The external diameter of the base 12 is less than the lesser diameter of the thread in the female part to be screwed on to the male part.

The internal diameter of the base 11 is greater than the greater diameter of the thread on the male part.

It is therefore possible to interpose the packing between the female part and the male part to be connected to it so that the latter penetrates inside the larger hole in the packing, while the end of said packing where the hole is smaller penetrates inside the threaded hole in the female part.

When the two parts are screwed together the plastic packing adapts its shape to fit between the two interacting threads. Adherence to each thread is facilitated and strengthened by increasing thickness of the walls from the smaller base to the larger base, said thickening creating a wedge-like effect that ensures the perfect seal.

The outward projecting rim 15 helps the fingers to keep hold of the packing and, when screwing is completed, can also act as a limit point of reference to the female part assisting it to draw the packing round the male thread. The wall 13 of the truncated cone is seen to be cut on an axial geometrical plane that creates the transversal edges 22 and 23.

A thin flab 24, of constant thickness, originates from one of the edges 23, said flap lying flush with the internal surface of the truncated cone, its width being practically the same as the length of the edge from which it originates.

Figs. 5 - 8 show a packing 30 similar to that in Figs. 3 and 4 except that the cut along the wall of the truncated cone 33 leaves intact the projecting rim 34 round the base of larger diameter.

The cut creates the transversal edge 31 while the wall of the truncated cone continues in the thin flap 36,of constant thickness, flush with the internal surface of the truncated cone and of a width practically equivalent to the length of the wall of said truncated cone.

The triangular cross section of wall 33 gradually joins up with the rectangular cross section of the flap 36.

Radial sections, shown on axes a, b in Fig. 6, make clearer the shape of the truncated cone wall close to the flap 36 (section along axis b) and at the transversal edge 32 (section along axis a).

By applying to the connection the packings as described with a cut a long one generatrix of the truncated cone, when the threaded parts are screwed together the inner surface of the flap, connected to one transversal edge made by the cut, slides over the outer surface of the packing beyond the cut, covering it and restoring surface continuity to the truncated cone.

## Claims

1. Annular packing (10) (30) having a truncated cone-shaped body of plastic material for making a watertight seal between two tubular threaded parts, the thickness (14) of the walls (13) (33) gradually increasing starting from said body's smaller diameter, and having an outer annular rim (15) (34) for added strength situated where the diameter is greatest,
characterized in that a longitudinal cut extends through the thickness of the body from the smaller diameter end at least up to the strengthening rim (15) (34) to facilitate adaptation to the threads of the tubular parts to be joined.

2. Packing as in claim 1,
characterized in that the cut extends along the whole length of the packing.

3. Packing as in claim 1,
characterized in that the cut extends for the full length of the wall (33) but does not pass through the strengthening rim (34).

4. Packing as in claim 1,
characterized in that on one (23) of the two contraposed edges (22) (23) created by the cut, there is a thin flap (24) (36) of constant thickness whose inner surface is continuous with the inner surface of the truncated cone-shaped body, width of said flap being practically the same as the length of the wall (21) (33), said flap matching up with the outer surface of said wall (21)(33) and passing across the contraposed edge (22) (32) to ensure continuity of said wall.

5. Packing as in claim 1,
characterized in that it is made of polytetrafluoroethylene.

## Patentansprüche

1. Ringförmige Dichtung (10, 30) mit kegelstumpfförmigem Körper, aus Kunststoff, zur hermetischen Abdichtung der Verbindungsstelle zwischen zwei Schraubrohrelementen, mit einer Dicke der Wände (13, 33) von 14, die beginnend beim geringeren Durchmesser allmählich größer wird, und mit ringförmigem Verstärkungs-Außenrand (15, 34) auf Höhe des größeren Durchmessers, gekennzeichnet durch den Umstand, daß sie einen Längseinschnitt aufweist, der sich über die gesamte Körperdikke vom Ende mit geringerem Durchmesser bis zum Verstärkungsrand (15, 34) erstreckt, so daß die Anpassung an die Gewinde der zu verbindenden Rohrelemente vereinfacht wird.

2. Dichtung wie unter Patentanspruch 1) beschrieben, gekennzeichnet durch den Umstand, daß der Einschnitt sich über die gesamte Länge der Dichtung erstreckt.

3. Dichtung wie unter Patentanspruch 1) beschrieben, gekennzeichnet durch den Umstand, daß der Einschnitt sich über die gesamte Länge der Wand 33 ausschließlich des Verstärkungsrands 34 erstreckt.

4. Dichtung wie unter Patentanspruch 1) beschrieben, gekennzeichnet durch den Umstand, daß bei einem 23 der beiden durch den Einschnitt entstehenden und sich gegenüberliegenden Ränder 22 - 23 eine schmale Lasche 24, 36 von konstanter Dicke ihren Ursprung hat, deren Innenfläche sich in der Innenfläche des kegelstumpfförmigen Körpers fortsetzt, mit einer Breite, die der Länge der kegelstumpfförmigen Wand 21, 33 nahezu entspricht, die zusammenpaßt mit der Außenfläche der besagten Wand 21, 33 und über den gegenüberliegenden Rand 22, 32 hinausgeht, was ihre Lückenlosigkeit gewährleistet.

5. Dichtung wie unter Patentanspruch 1) beschrieben, gekennzeichnet durch den Umstand, daß sie aus Polytetrafluoräthylen gefertigt ist.

## Revendications

1. Joint (10,30) annulaire, avec corps en tronc de cône, en matériel plastique, pour l'étanchéité de la jonction entre deux éléments tubulaires filetés, avec épaisseur 14 des cloisons (13,33) graduellement supérieur à partir de son diamètre inférieur et avec bord (15,34) annulaire extérieur, de renfort, en corresponance du diamètre supérieur caractérisé par le fait qu'il présente une entaille longitudinale qui s'étend, à travers l'épaisseur du corps, de l'extrémité de diamètre inférieur au moins jusqu'au bord de renfort (15,34) de manière à faciliter l'adaptation aux filetages des éléments tubulaires à assembler.

2. Joint comme à la revendication 1),
caractérisé par le fait que l'entaille s'étend sur toute la longueur.

3. Joint comme à la revendication 1),
caractérisé par le fait que l'entaille s'étend sur toute la longueur de la cloison 33 exclu le bord 34 de renfort.

4. Joint comme à la revendication 1),
caractérisé par le fait que sur un 23 des deux bords 22-23, opposés générés par l'entaille, prend son origine une languette 24, 36 mince à épaisseur constante, ayant une surface intérieure continue avec celle intérieure du corps en tronc de cône, avec une largeur presque égale à la longueur de la cloison 21,33 en tronc de cône, qui va coïncider avec la surface extérieure de cette cloison 21,33 en dépassant le bord 22,32 opposé et cela pour assurer la continuité de celle-ci.

5. Joint comme à la revendication 1),
caractérisé par le fait qu'il est construit en polytétrafluorostylène.
